# EUROPÄISCHE PATENTSCHRIFT

(11) **EP 2 694 272 B1**
(45) Veröffentlichungstag und Bekanntmachung des Hinweises auf die Patenterteilung: **06.03.2019**
(21) Anmeldenummer: 12724553.8
(22) Anmeldetag: 31.03.2012
(51) Int. Cl.: B29C 63/00, B27D 5/00

(54) **SCHMALFLÄCHENBESCHICHTUNGSVERFAHREN ZUM AUFBRINGEN EINER WÄRMEAKTIVIERBAREN KANTENBESCHICHTUNG MITTELS ERHITZTER DRUCKLUFT**
NARROW SURFACE COATING METHOD FOR APPLYING A HEAT-ACTIVATABLE EDGE COATING BY MEANS OF HEATED PRESSURIZED AIR
PROCÉDÉ D'APPLICATION D'UN REVÊTEMENT D'ARÊTE THERMOACTIVABLE AU MOYEN D'AIR COMPRIME CHAUFFE

(30) Priorität: 01.04.2011 DE 102011015898
(43) Veröffentlichungstag der Anmeldung: 12.02.2014
(73) Patentinhaber: Schulte-Göbel, Christof, 59872 Meschede (DE)
(72) Erfinder: Schulte-Göbel, Christof, 59872 Meschede (DE); Kluge, Holger, 57392 Schmallenberg (DE)
(74) Vertreter: Kalkoff & Partner
(86) Internationale Anmeldenummer: PCT/DE2012/000360
(87) Internationale Veröffentlichungsnummer: WO 2012/130224

(56) Entgegenhaltungen:
- DE-A1- 1 621 814
- DE-A1- 3 415 747
- DE-A1- 3 732 157
- US-A- 4 222 812

## Beschreibung

Die vorliegende Erfindung betrifft ein Verfahren zum Aufbringen eines mehrschichtigen, kleberfreien, wärmeaktivierbaren, bandförmigen Kantenstreifens auf Schmalflächen eines Werkstücks.

Vorrichtungen zum Aufbringen eines Kantenstreifens auf eine Schmalfläche eines Werkstücks, insbesondere eines Holzwerkstücks, sind in unterschiedlichen Ausführungsformen bekannt, z.B. aus der DE-OS 1 621 814, der US 4,222,812, der DE 37 32 157 A1 und der DE 34 15 747 A1 sowie der AU 4628979 A. Weiter wird die DE-AS 1130 998 genannt. Diese sogenannten Kantenanleimvorrichtungen werden bei der Holzbearbeitung eingesetzt, um Kantenstreifen (auch Umleimer genannt) auf eine Schmalfläche eines Werkstücks aufzubringen. Häufig kommen zu diesem Zweck maschinell angetriebene Spezialmaschinen zum Einsatz, die überwiegend dazu geeignet sind, Kantenstreifen auf Werkstückschmalflächen aufzubringen. Diese Spezialmaschinen sind relativ teuer, liefern jedoch hinsichtlich der Passgenauigkeit des Kantenstreifens auf den Werkstückschmalflächen gute Ergebnisse.

Dabei kommen bisher in der Regel Kantenstreifen zum Einsatz, die einseitig mit einem aktivierbaren Schmelzkleber versehen sind oder noch keinen Kleber aufgetragen haben. Der Kantenstreifen wird entsprechend der Schmalflächenlänge des zu bearbeitenden Werkstücks passgenau mit Überstand geschnitten, auf die Werkstückschmalfläche aufgesetzt, nach Auftragen eines unter Hitze zähflüssigen Klebers auf die Kante oder auf die Werkstückschmalfläche oder Aktivierung eines vorab aufgetragenen Schmelzklebers auf der Schmalfläche fixiert und gegebenenfalls manuell oder maschinell nachbearbeitet. Diese Methode liefert allerdings hinsichtlich der Passgenauigkeit des Kantenstreifens häufig nur unzureichende Ergebnisse. So ist neben der aufwändigen Handhabung von Heißklebern (z.B. EVA oder PUR) beim Auftragen und Andrücken insbesondere bei vorab als Schicht aufgetragenen thermisch aktivierbaren Schmelzklebern von Nachteil, dass die Schmelzkleberschicht nach dem Auftragen aufgrund ihrer notwendigen Schichtdicke und ihrer teilweisen Aushärtung am fertigen Werkstück ästhetisch nachteilig sichtbar bleibt. Auch ist die Temperierung der Schmelzkleberschicht heikel, da einerseits eine möglichst hohe Beschichtungstemperatur erreicht werden soll, die für eine Temperaturbeständigkeit und Haltbarkeit verantwortlich ist und um den Schmelzkleber auch bei höheren Vorschubgeschwindigkeiten des Kantenstreifens sicher verarbeiten zu können, andererseits das Material des häufig aus Kunststoffmaterialien bestehenden Kantenstreifens aber hierdurch nicht beeinträchtigt werden darf. Auch kommt es durch die Zeit zwischen Aufheizung der Schmelzkleberschicht und dem tatsächlichen Andrücken des Kantenstreifens zu Abkühlungseffekten des Schmelzklebers, z.B. durch unterschiedlichen Wärmeabfluss in das in der Regel kalte Werkstück hinein, durch die der Schmelzkleber häufig nicht im optimalen Temperaturbereich bei der Verklebung vorliegt und daher entweder zu zäh oder zu dünnflüssig vorliegt, wodurch die Verklebung des Kantenstreifen nicht optimal erfolgt bzw. die Klebeschicht sichtbar bleibt.

In Folge dieser Probleme sind andere Materialien für Kantenstreifen entwickelt worden, die diese Nachteile verhindern können. So sind beispielsweise aus der EP 1163 864 B1 und aus der EP 1852 242 B1 sog. kleberlose Kantenstreifen bekannt, die aus zwei bevorzugt koextrudierten Schichten von unterschiedlichen Kunststoffmaterialien besteht, von denen eine durch Einfluss von Laserlicht derart aufgeschmolzen wird, dass sie wie bei den bekannten Schmelzkleberschichten auf Schmalflächen aufgebracht werden kann und mit diesen Schmalflächen verklebt. Zusätzlich zu den koextrudierten Kanten gibt es auch weitere Kantenvarianten. Diese werden beispielsweise postkoextrudiert oder nachträglich mit einer Beschichtung (z.B. mit Polyolefin) versehen. Die unterschiedlichen Beschichtungen haben im Idealfall die gleiche oder eine ähnliche Farbe wie der Kantenstreifen selbst. Die andere der beiden Schichten wird durch das Laserlicht nicht verändert und bildet die sichtbare Außenseite des Kantenstreifens. Hierbei sind diese beiden koextrudierten, postkoextrudierten oder nachträglich beschichteten Schichten optisch gleich oder ähnlich aussehend ausgebildet und weisen insbesondere auch die gleiche oder eine ähnliche Farbe auf, so dass die ohnehin nur dünne aufgeschmolzene Schicht sich nach dem Aufbringen des Kantenstreifens optisch nicht oder nur geringfügig von dem Rest des Kantenstreifens unterscheidet. In der Branche wird daher entweder von der sog. Nullfuge oder unter Bezugnahme auf die bisher übliche Art der thermischen Aktivierung von der Laserkante gesprochen.

An dieser Art der Beschichtung von Schmalflächen an Möbelplatten oder dgl. ist allerdings nachteilig, dass diese Art der Beschichtung der Schmalflächen einen hohen apparativen Aufwand benötigt. So sind umfangreiche Laseranlagen, z.B. Laser mit Leistungen von 2 kW und mehr, für die Erwärmung der Laserkanten erforderlich, zudem ist der Arbeitsschutz wegen der Verwendung von energiereichen Lasern problematisch und es gibt Probleme bei der Erwärmung der Kantenstreifen, die von der Form des Kantenstreifens abhängen. Es ist daher aus der EP 1 800 813 A2 oder aus der DE 20 2009 009 253 U1 bekannt, zur thermischen Aktivierung des Kantenstreifens statt eines Laserstrahls plasmaförmige Gase zu nutzen, deren Erzeugung und Handhabung einfacher als bei der Laseraktivierung sein sollen. Allerdings ist auch hierbei ein nicht unerheblicher apparativer Aufwand notwendig, so dass auch diese technische Lösung wie auch die Laseraktivierung der Kantenstreifen sich nicht für den kleineren Handwerker oder gar den Heimwerker eignet.

Aufgabe der Erfindung ist es, eine preiswerte und flexible Art der Beschichtung von Schmalflächen von Werkstücken insbesondere mit mehrschichtig kleberfrei wärmeaktivierbaren Kantenstreifen zur Verfügung zu stellen, die apparativ einfach vorzunehmen ist und darüber hinaus eine hohe Passgenauigkeit und optische Qualität des Kantenstreifens an der Schmalfläche des Werkstücks gewährleistet.

Die Lösung der erfindungsgemäßen Aufgabe ergibt sich aus Anspruch 1.

Die Vorrichtung geht aus von einer Schmalflächenbeschichtungsvorrichtung zum Aufbringen eines bandförmigen Kantenstreifens auf Schmalflächen eines Werkstücks, wobei der mehrschichtige kleberfreie Kantenstreifen wärmeaktivierbar auf den Schmalflächen befestigbar ist (sog. Nullfuge oder Laserkante), aufweisend mindestens eine Zufuhreinrichtung für den Kantenstreifen und eine Anpresseinrichtung, die den Kantenstreifen an die Schmalfläche des Werkstücks andrückt. Bei einer derartigen Kantenbeschichtungsvorrichtung ist im Bereich von Zufuhreinrichtung und/oder Anpresseinrichtung ein Auslaß für Heißluft oder das Heißgas als erhitzte Druckluft angeordnet, der die erhitzte Druckluft unter Druck auf den Kantenstreifen und/oder die wärmeaktivierbare Schicht des Kantenstreifens aufgibt, wobei mit dem Auslaß in fluidischer Verbindung für die erhitzte Druckluft stehend eine Erwärmungseinrichtung vorgesehen ist, die die erhitzte Druckluft mindestens auf die benötigte Aktivierungstemperatur für die wärmeaktivierbare Schicht des Kantenstreifens bringt. Unter Druck, mit dem die erhitzte Druckluft auf den Kantenstreifen und/oder die wärmeaktivierbare Schicht des Kantenstreifens aufgegeben wird, ist hierbei ein Druck der erhitzten Druckluft zu verstehen, der höher ist als der Druck, der mit bekannten Heißluftgebläsen gewährleistet werden kann.

Es hat sich überraschend herausgestellt, dass Kantenstreifen in Form der Nullfuge oder Laserkante, die üblicherweise aus zweischichtigen, meist koextrudierten, postkoextrudierten oder nachträglich z.B. mit Polyolefinen beschichteten Materialien bestehen, doch auch mit erhitzter Druckluft derart wärmeaktivierbar sind, dass sie mit den Schmalflächen des Werkstücks sicher verklebt werden können. Dies ist insofern überraschend, da derartige Kantenstreifen gerade nicht in herkömmlicher Weise thermisch erhitzt werden, sondern mittels Laser bzw. Plasma sehr dosiert Wärme zugeführt bekommen, die eine nur kleine und wenig dicke wärmeaktivierte Zone hervorrufen, in der der Kantenstreifen dann unmittelbar mit der Schmalfläche des Werkstückes verklebt werden muss. Eine großflächigere Erhitzung der wärmeaktivierbaren Schicht des Kantenstreifens etwa durch Heißluft oder Heißgas, wie dies bei den herkömmlichen kleberbeschichteten Kantenstreifen grundsätzlich bekannt ist, führt zudem ebenfalls nicht zu dem gewünschten Ergebnis des lokalen Aufschmelzens der wärmeaktivierbaren Schicht des Kantenstreifens. Wird ein solches Erhitzen des Kantenstreifens mit handelsüblich hierzu verwendeten Heißluftgebläsen oder dgl. vorgenommen, so reicht der von solchen Gebläsen abgegebene Druck und teilweise der Volumenstrom der Heißluft oder des Heißgases zur Wärmeaktivierung bei entsprechendem Vorschub der hier zur Rede stehenden kleberfreien Kantenstreifen nicht aus. Die wärmeaktivierbare Schicht des Kantenstreifens wird dabei nicht bzw. nicht ausreichend aufgeschmolzen, so dass eine Verklebung des Kantenstreifens mit der Schmalfläche des Werkstückes nicht oder nicht zuverlässig bei entsprechendem, wirtschaftlich tragbarem Vorschub erfolgen kann. Wird hingegen die Temperatur der erhitzten Druckluft sowie der Volumenstrom der erhitzten Druckluft deutlich erhöht und trifft die erhitzte Druckluft daher mit einem entsprechend hohen Druck, der höher ist als der Druck, der mit bekannten Heißluftgebläsen gewährleistet werden kann, auf den Kantenstreifen bzw. dessen wärmeaktivierbare Schicht auf, so wird überraschend eine mit der Laseraktivierung bzw. der Plasmaaktivierung vergleichbare Wärmeaktivierung des Kantenstreifens erreicht, die eine Verarbeitung des Kantenstreifens wie bei den ursprünglich vorgesehenen Aktivierungsverfahren ermöglicht. Hierbei ist die Erzeugung eines entsprechenden Volumenstroms der erhitzten Druckluft, unter höherem Druck, der höher ist als der Druck, der mit bekannten Heißluftgebläsen gewährleistet werden kann, der in bestimmungsgemäßer Weise auf den Kantenstreifen bzw. dessen wärmeaktivierbare Schicht auftrifft, mit wesentlich geringerem technischen Aufwand möglich als bei der Laseraktivierung bzw. der Plasmaaktivierung und damit insgesamt wesentlich kostengünstiger. Zudem ermöglicht die Kantenbeschichtungsvorrichtung die Verarbeitung entsprechender Kantenstreifen sowohl auf kleineren Kantenbeschichtungsvorrichtungen, wie sie etwa der Handwerker oder auch Heimwerker verwendet, bzw. es ist auch eine Nachrüstung bestehender konventioneller Kantenbeschichtungsvorrichtungen für die Verarbeitung entsprechender Kantenstreifen des Typs Nullfuge oder Laserkante möglich. Auch der Einsatz bei Industriebeschichtungsmaschinen funktioniert problemlos. Damit wird die Einsetzbarkeit von Kantenstreifen in Form von Nullfugen sowohl dem eher handwerklichen Einsatz als auch der Industrie zugänglich gemacht. Von Bedeutung ist hierbei vor allem, dass die erhitzte Druckluft möglichst nah vor der ersten Andruckrolle sowie möglichst nah an dem Kantenstreifen bzw. der wärmeaktivierbaren Schicht auf diesen aufgegeben wird, da ansonsten ein deutlicher Druck- und Temperaturabfall der erhitzten Druckluft gegenüber dem Druck und der Temperatur direkt am Austritt der Düse und zudem eine Beimischung von kalter Umgebungsluft festzustellen ist, durch die eine geforderte Erhitzung des Kantenstreifens bzw. der wärmeaktivierbaren Schicht erschwert oder unmöglich gemacht wird. Wird dies beachtet, so sind Vorschubgeschwindigkeiten bei der Beschichtung der Schmalseiten von Werkstücken erreichbar, die im Bereich von 1-20 m/min oder mehr liegen und damit auch eine wirtschaftliche Beschichtung erlauben. Diese Vorrichtung ist aufgrund ihrer Baugröße auch für den Einsatz auf Bearbeitungszentren zur Verarbeitung von Formteilen geeignet.

Von besonderem Vorteil ist es, wenn der Auslaß für die erhitzte Druckluft in Form einer Düse mit einem schmalen Auslaßschlitz oder mehreren kleinen Düsen-Öffnungen ausgebildet ist, der die erhitzte Druckluft über die ganze Breite des Kantenstreifens bzw. die Schmalfläche des Werkstücks gleichmäßig auf den Kantenstreifen und/oder die wärmeaktivierbare Schicht des Kantenstreifens bzw. die Schmalfläche des Werkstücks aufbläst. Eine derartige Düse ermöglicht eine sehr gezielte Aufbringung der erzeugten erhitzten Druckluft auf den Kantenstreifen bzw. dessen wärmeaktivierbare Schicht bzw. die Schmalfläche des Werkstücks, wobei über die ganze Breite des Kantenstreifens bzw. die Schmalfläche des Werkstücks gleichmäßige Erwärmungsverhältnisse der wärmeaktivierbaren Schicht des Kantenstreifens bzw. die Schmalfläche des Werkstücks erzielbar werden. Zudem beschleunigt eine derartige Düse den Volumenstrom der austretenden erhitzten Druckluft zusätzlich, so dass die Austrittsgeschwindigkeit und damit auch die Auftreffgeschwindigkeit der erhitzten Druckluft auf den Kantenstreifen bzw. dessen wärmeaktivierbare Schicht bzw. die Schmalfläche des Werkstücks und damit den Auftreffdruck gegenüber der bei der Kantenbeschichtung herkömmlichen Heißlufterzeugung stark erhöht werden kann. Damit wird der Kantenstreifen und die Schmalfläche des Werkstücks punktuell bzw. linienförmig kurzzeitig sehr stark erhitzt und die wärmeaktivierbare Schicht sicher aufgeschmolzen, so dass sie sich gut und fest an die Schmalflächen des Werkstückes andrücken und dort befestigen lässt. Gleichzeitig wird durch die nur kurzzeitige und starke Erwärmung des Kantenstreifens im Einwirkbereich des Auslasses für die erhitzte Druckluft die nicht wärmeaktivierbare Schicht des Kantenstreifens nicht unzulässig und vor allem nicht mit optisch sichtbaren Auswirkungen erhitzt und behält damit ihre gewünschten technischen und optischen Eigenschaften bei. In weiterer Ausgestaltung ist es denkbar, dass der Auslaß für erhitzte Druckluft derart angeordnet und ausgerichtet ist, dass die erhitzte Druckluft in Richtung auf das Werkstück und/oder die Anpresszone für den Kantenstreifen auf der Schmalfläche entweicht. So kann der Kantenstreifen über einen längeren Abschnitt unmittelbar von der Anpressstelle des Kantenstreifens temperiert werden und die wärmeaktivierbare Schicht des Kantenstreifens optimal für die Herstellung der Verklebung eingestellt werden.

In einer anderen Ausgestaltung ist es auch denkbar, dass der Auslaß für die erhitzte Druckluft als eine Anordnung mehrerer Düsen oder verstellbarer Düsen ausgebildet ist, die die erhitzte Druckluft über die ganze Breite des Kantenstreifens und/oder die Schmalfläche des Werkstücks oder Teile davon auf den Kantenstreifen und/oder die wärmeaktivierbare Schicht des Kantenstreifens und/oder die Schmalfläche des Werkstücks aufbläst. Hier können unterschiedliche Anordnungen der einzelnen Düsen angewendet werden, durch die etwa die erhitzte Druckluft bei Verwendung unterschiedlich breiter Kantenstreifen nur in dem Bereich des jeweils zu verarbeitenden Kantenstreifens und/oder die Schmalfläche des Werkstücks aufgebracht wird und einzelne seitliche Düsen abgeschaltet werden, durch die der Kantenstreifen gar nicht erhitzt werden würde. Dies trägt zur Reduzierung der benötigten Menge der erhitzten Druckluft bei schmaleren Kantenstreifen bei. Denkbar ist z.B., dass die Düse einen schmalen Auslassschlitz oder eine Anzahl benachbart angeordneter Auslassbohrungen aufweist.

Von wesentlichem Vorteil ist es, wenn die erhitzte Druckluft unter erhöhtem Druck, der höher ist als der Druck, der mit bekannten Heißluftgebläsen gewährleistet werden kann, gegenüber dem Atmosphärendruck auf den Kantenstreifen und/oder die wärmeaktivierbare Schicht des Kantenstreifens auftrifft. Dieser erhöhte Druck, der üblicherweise vorrangig aus einem großen geförderten Volumenstrom der erhitzten Druckluft in Verbindung mit der Vorschubgeschwindigkeit resultiert, trägt zu einer besonders effektiven Erwärmung der wärmeaktivierbaren Schicht des Kantenstreifens und/oder der Schmalfläche des Werkstücks bei, so dass sich die wärmeaktivierbare Schicht bei Temperaturen aufschmelzen lässt, die eine Beeinträchtigung der anderen Schicht des Kantenstreifens vermeiden. Hierbei kann die erhitzte Druckluft unter einem Druck von mehr als einem bar, vorzugsweise von mehr als zwei bar gegenüber dem Atmosphärendruck auf den Kantenstreifen und/oder die wärmeaktivierbare Schicht des Kantenstreifens auftreffen.

Der erhöhte Druck der auf den Kantenstreifen geblasenen erhitzten Druckluft lässt sich vorteilhaft dadurch erreichen, dass die zugeführte Luft schon unter Druck, vorzugsweise von mehr als zwei bar gegenüber dem Atmosphärendruck, in die Erwärmungseinrichtung eingeblasen wird. Hierdurch werden zum einen unvermeidliche Strömungsverluste auf dem Weg durch die Erwärmungseinrichtung hindurch kompensiert und zum anderen eine turbulente Strömung durch die Erwärmungseinrichtung erzeugt, die einen besonders guten Wärmeübergang auf die zu erzeugende erhitzte Druckluft erlaubt. Damit ist die unter erhöhtem Druck in die Erwärmungseinrichtung eingeblasene Luft besonders geeignet, die Wärmeaktivierung des Kantenstreifens hervorzurufen. Die in die Erwärmungseinrichtung eingeblasene Luft oder Gas kann von einem externen Drucklufterzeuger wie einem Kompressor oder dgl. stammen. Alternativ oder auch zusätzlich kann in oder an der Erwärmungseinrichtung eine luftfördernde Einrichtung, vorzugsweise ein Ventilator angeordnet sein.

Gerade für den Einsatz der Kantenbeschichtungsvorrichtung im eher handwerklichen Bereich, aber auch im industriellen Bereich und für mobile Beschichtungsvorrichtungen ist es von Vorteil, wenn die Erwärmungseinrichtung platzsparend, insbesondere unterhalb oder oberhalb oder seitlich oder vor oder hinter der Zufuhreinrichtung und der Anpresseinrichtung angeordnet ist. Hierdurch befindet sich die Erwärmungseinrichtung in der Nähe des Auslasses für die erhitzte Druckluft, wodurch eine Abkühlung der erhitzten Druckluft auf dem Weg von der Erwärmungseinrichtung zum Auslaß vermieden oder stark reduziert werden kann. Gleichzeitig behindert diese Anordnung der Erwärmungseinrichtung jedoch nicht die Handhabung von Werkstück und Kantenstreifen im Bereich der Kantenbeschichtungsvorrichtung und der Maschinenbediener kann räumlich unbehindert von der Erwärmungseinrichtung wie gewohnt an der Kantenbeschichtungsvorrichtung arbeiten. Bei stationären oder auch größeren mobilen Beschichtungsvorrichtungen kann die Erwärmungseinrichtung selbstverständlich auch an anderer Stelle, z.B. seitlich außerhalb des Arbeitsbereiches angeordnet werden, wenn die fluidische Verbindung zwischen Erwärmungseinrichtung und Auslaß und eine entsprechende Wärmeisolierung dieser Verbindung gewährleistet wird, so dass die erhitzte Druckluft sich auf dem Weg zur Düse nicht zu sehr abkühlt.

In einer vorteilhaften Ausgestaltung ist es denkbar, dass die Erwärmungseinrichtung eine vorzugsweise mäanderförmig oder kreisförmig von außen nach innen oder umgekehrt verlaufende Gas- oder Luftführung in Form von nacheinander durchströmten Wärmetauscherelementen aufweist, in der die aus der Umgebung angesaugte oder unter Druck, z.B. mit zwei bar oder mehr eingeblasene Luft direkt oder indirekt in Kontakt mit Heizelementen gebracht wird und die diese Luft zur erhitzten Druckluft aufheizen. Derartige Wärmetauscherelemente können beispielsweise durch abschnittsweise zueinander parallele Rohrbündel gebildet werden, die angrenzend an mindestens je ein Heizelement oder ein anderes Rohr angeordnet sind und die Heizenergie des Heizelementes an die die Rohrbündel durchströmende Luft abgeben. Ebenfalls denkbar sind luftdurchlässige Sinterplatten mit Heizelementen. Derartige Erwärmungseinrichtungen können kostengünstig und basierend auf herkömmlichen Baueinheiten zusammengestellt und damit kostengünstig produziert werden. Es ist selbstverständlich auch denkbar, dass unterschiedliche Arten von Wärmetauschern oder Heizelementen zum Einsatz kommen, so können etwa elektrisch oder per Gas beheizte Heizelemente verwendet werden. Auch kann die Luftführung innerhalb der Erwärmungseinrichtung anders als mäanderförmig gestaltet werden, so ist lediglich beispielhaft eine eher kreisförmige Anordnung der Luftführung z.B. kreisförmig von außen nach innen oder umgekehrt denkbar. Bei Verwendung einer mäanderförmig ausgebildeten Anordnung der Luftführung ist es denkbar, dass zwischen den vorzugsweise abschnittsweise zueinander parallelen Rohrbündeln Überströmungsbereiche angeordnet sind, in denen die erhitzte Druckluft in das nachfolgende Rohrbündel des in Strömungsrichtung nachfolgenden Wärmetauschers überströmt.

Von Vorteil insbesondere hinsichtlich der Effektivität der Wärmeübertragung auf die erhitzte Druckluft ist es, wenn die Erwärmungseinrichtung gegenüber der Umgebung wärmeisoliert ausgebildet ist. Hierdurch kann die Erwärmungseinrichtung etwa in Zeiten, in denen keine erhitzte Druckluft benötigt wird, quasi auf Vorrat aufgeheizt werden, so dass bei Abforderung von Heißluft eine entsprechende Wärmemenge zur Verfügung steht, die auch einen länger dauernden Beschichtungsvorgang der Kantenbeschichtungsvorrichtung ohne Einbrüche in der Versorgung mit erhitzter Druckluft ermöglicht. In der Erwärmungseinrichtung wird die damit eine benötigte Wärmemenge quasi auf Vorrat gespeichert, die dann eine sehr schnelle und über einen längeren Zeitraum nutzbare Abrufung dieser Wärme beim Beschichten der Schmalflächen eines Werkstückes ermöglicht. Die Erwärmungseinrichtung kann hierzu sogar während Zeiten, in denen keine erhitzte Druckluft benötigt wird, überhitzt werden und dient dann zusätzlich quasi als Wärmespeicher, aus dem auch große Mengen von erhitzter Druckluft mit hohem Volumenstrom abrufbar sind. Auch im Hinblick auf den Arbeitsschutz ist es von Vorteil, wenn die Erwärmungseinrichtung durch eine Isolierung etwa in Form von Dämmmaterialien wie Steinwolle, Glaswolle oder dgl. geschützt ist, so dass offene heiße Flächen der Erwärmungseinrichtung nicht vorliegen und zu Verbrennungen des Bedienpersonals führen können.

Die Erfindung betrifft ein Verfahren zum Aufbringen eines bandförmigen Kantenstreifens auf Schmalflächen eines Werkstücks, wobei der mehrschichtige, kleberfreie, wärmeaktivierbare Kantenstreifen auf den Schmalflächen befestigt wird, mittels einer Zufuhreinrichtung für den Kantenstreifen und einer Andruckrolle, die den wärmeaktivierten Kantenstreifen an die Schmalfläche des Werkstücks andrückt. Bei diesem Verfahren wird im Bereich von Zufuhreinrichtung und/oder Anpresseinrichtung Heißluft oder Heißgas erfindungsgemäß als erhitzte Druckluft unter Druck auf den Kantenstreifen und/oder die wärmeaktivierbare Schicht des Kantenstreifens aufgegeben, wobei die erhitzte Druckluft von einer Erwärmungseinrichtung mindestens auf die benötigte Aktivierungstemperatur für die wärmeaktivierbare Schicht des Kantenstreifens gebracht wird. Hierbei kann die erhitzte Druckluft insbesondere auch unter erhöhtem Druck gegenüber dem Atmosphärendruck auf den Kantenstreifen und/oder die wärmeaktivierbare Schicht des Kantenstreifens geblasen werden, wobei die in die Erwärmungseinrichtung eingeblasene Druckluft von einem externen Drucklufterzeuger stammt. So kann die erhitzte Druckluft vorteilhaft unter einem Druck von mehr als einem bar, vorzugsweise von mehr als zwei bar gegenüber dem Atmosphärendruck auf den Kantenstreifen und/oder die wärmeaktivierbare Schicht des Kantenstreifens auftreffen.

Weiterhin ist es denkbar, dass die Wirkung der erhitzten Druckluft beim Auftreffen auf den Kantenstreifen und/oder die wärmeaktivierbare Schicht des Kantenstreifens durch Beeinflussung des Volumenstroms und/oder der Temperatur und/oder des Drucks der erhitzten Druckluft und/oder die Vorschubgeschwindigkeit des Kantenstreifens beim Beschichten der Schmalfläche geregelt wird. Durch die Beeinflussung der Stellgrößen Volumenstrom und/oder Temperatur und/oder Druck der erhitzten Druckluft sowie Vorschubgeschwindigkeit des Kantenstreifens beim Beschichten und deren Zusammenwirken beim Beschichtungsvorgang kann ein gewünschtes Maß der Wärmeaktivierung der wärmeaktivierbaren Schicht des Kantenstreifens durch das Aufschmelzen der wärmeaktivierbaren Schicht erreicht werden, die abhängig z.B. von der Biegbarkeit des Kantenstreifens, dessen Material und der Eigenschaften der wärmeaktivierbaren Schicht eine optimale Verklebung des Kantenstreifens an der Schmalfläche des Werkstückes erlaubt.

Eine besonders bevorzugte Ausführungsform der Kantenbeschichtungsvorrichtung zeigt die Zeichnung.

Es zeigen:
- Figur 1: - eine schematisierte Draufsicht auf eine Kantenbeschichtungsvorrichtung,
- Figur 2: - schematische dargestelltes Zusammenwirken der wesentlichen Komponenten der Kantenbeschichtungsvorrichtung zwischen Erwärmungseinrichtung und Kantenstreifen bei der Beschichtung von Werkstückschmalflächen.

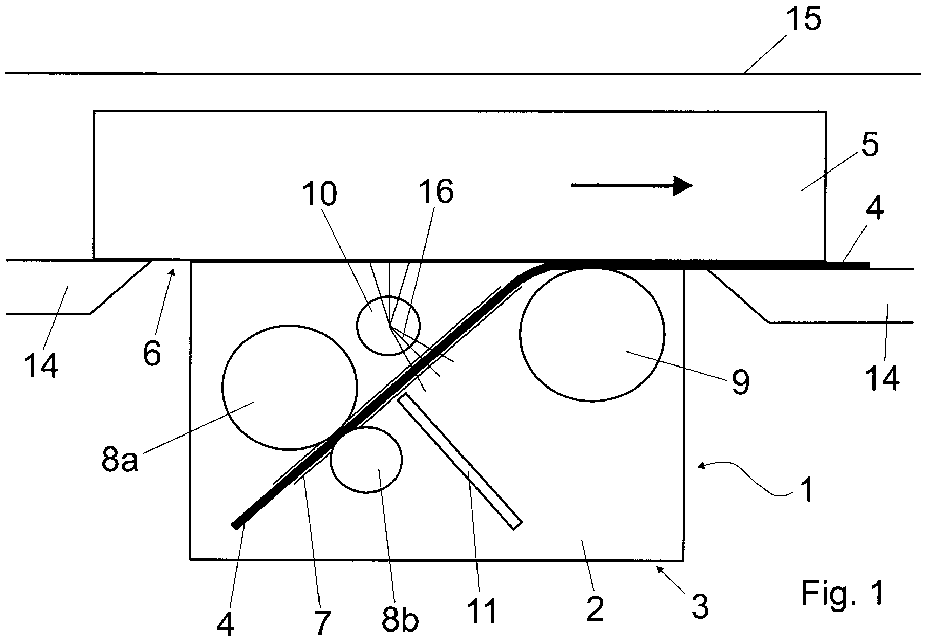

In Fig. 1 ist eine schematisierte Draufsicht auf eine Kantenbeschichtungsvorrichtung 1 zum Aufbringen eines Kantenstreifens 4 auf eine Schmalfläche 6 eines Werkstücks 5 gemäß einer bevorzugten Ausführungsform der vorliegenden Erfindung gezeigt.

Die Kantenbeschichtungsvorrichtung 1 weist einen Träger 2 auf, der in diesem Ausführungsbeispiel im Wesentlichen plattenförmig ausgebildet ist. Auf dem Träger 2 sind eine Zufuhreinrichtung 7 zur kontinuierlichen Zufuhr des Kantenstreifens 4, eine erste Druckrolle 8b, eine Vorschubrolle 8a, eine Andruckrolle 9, ein Auslaß 10 für Heißluft 16 sowie eine Schneideinrichtung 11 angeordnet. Die Vorschubrolle 8a, die Druckrolle 8b und die Andruckrolle 9 sind jeweils drehbar gelagert. Die Zufuhreinrichtung 7 umfasst eine hier nicht im Detail dargestellte Führungsschiene, entlang welcher der Kantenstreifen 4 in Zufuhrrichtung geführt wird.

Die Zufuhreinrichtung 7 ist so ausgebildet, dass sie den Kantenstreifen 4 der Schmalfläche 6 unter einem spitzen Winkel relativ zur Vorschubrichtung des Werkstücks 5 zuführt. Die Druckrolle 8b steht mit dem Kantenstreifen 4 innerhalb der Zufuhreinrichtung 7 in Wirkverbindung und sorgt in der Zufuhreinrichtung 7 für dessen kontinuierliche Zufuhr in Transportrichtung. Ferner ist eine zusätzliche Vorschubrolle 8a vorgesehen, die der Druckrolle 8b in der Weise gegenüberliegend angeordnet ist, dass die Zufuhreinrichtung 7 abschnittsweise zwischen der Druckrolle 8b und der Vorschubrolle 8a verläuft. Die Vorschubrolle 8a sorgt für eine sichere Führung des Kantenstreifens 4 in der Zufuhreinrichtung 7.

In Vorschubrichtung hinter der Führungsrolle 8a ist ein Auslaß 10 für erhitzte Druckluft 16 in der Weise angeordnet, dass die aus dem Auslaß 10 strömende erhitzte Druckluft 16 im Wesentlichen auf die wärmeaktivierbare Schicht des Kantenstreifens 4 und/oder die Schmalfläche des Werkstücks gerichtet ist. Bei dieser wärmeaktivierbaren Schicht handelt es sich üblicherweise um ein thermoplastisches, üblicherweise koextrudiertes, postkoextrudiertes oder nachträglich beschichtetes Material, das durch Wärmezufuhr bei einer bestimmten Temperatur durch Anschmelzen aktiviert wird, so dass der Kantenstreifen 4 an der Schmalfläche 6 des Werkstücks 5 haften kann.

Ferner ist in Vorschubrichtung betrachtet hinter dem Auslaß 10 für die erhitzte Druckluft 16 eine Andruckrolle 9 vorgesehen, die so ausgebildet ist, dass der Kantenstreifen 4 in Vorschubrichtung in der Weise umgebogen wird, dass er im Wesentlichen parallel zur Schmalfläche 6 des Werkstücks 5 passgenau ausgerichtet wird. Während des manuellen oder maschinellen Vorschubs des Werkstücks 5 wirkt stets eine Kraftkomponente senkrecht zur Vorschubrichtung in Richtung der Kantenbeschichtungsvorrichtung 1. Dadurch wird zwischen der Schmalfläche 6 des Werkstücks 5, dem Kantenstreifen 4 und der Andruckrolle 9 ein Anpressdruck erzeugt, um eine Adhäsionsverbindung zwischen der Schmalfläche 6 und dem Kantenstreifen 4 herzustellen.

Schließlich ist im vorliegenden Ausführungsbeispiel noch eine manuell betätigbare, um eine Drehachse schwenkbar angelenkte Schneideinrichtung 11 vorgesehen. Eine Schneidfläche der Schneideinrichtung 11 ist dabei so angeordnet, dass sie bei einer manuellen Betätigung eines Betätigungshebels der Schneideinrichtung 11 den Kantenstreifen 4 etwa in einem Abschnitt zwischen der Vorschubrolle 8a und dem Auslaß 10 quer zur Transportrichtung durchtrennt. Die manuelle Betätigung der Schneideinrichtung 11 gestattet es somit, den Kantenstreifen 4 hinreichend passgenau zu durchtrennen, damit der Kantenstreifen 4 endseitig die Schmalfläche 6 des Werkstücks 5 im Wesentlichen bündig abschließt.

Unterhalb des Trägers 2 ist die Erwärmungseinrichtung 3 in nicht näher angegebener Weise derart angeordnet, dass der Weg der erzeugten erhitzten Druckluft 16 zum Auslaß 10 kurz ist und gleichzeitig die Erwärmungseinrichtung 3 den Betrieb und die Benutzung der Kantenbeschichtungsvorrichtung 1 nicht weiter behindert. Die Erwärmungseinrichtung 3 kann dabei wärmeisoliert werden, indem die Erwärmungseinrichtung 3 vollständig in ein Dämmmaterial wie Glaswolle, Steinwolle oder dgl. eingepackt wird.

Der Auslaß 10 der Kantenbeschichtungsvorrichtung 1 für die in der Erwärmungseinrichtung 3 erzeugte erhitzte Druckluft 16 wird dabei in vorteilhafter Weise als Schlitzdüse ausgebildet, die einen längsförmigen schmalen Auslaß für die erhitzte Druckluft 16 bildet. Die Düse kann aber auch aus mehreren kleinen Düsenöffnungen bestehen. Diese Schlitzdüse oder Düsenanordnung aus Einzeldüsen sorgt für eine gleichmäßige Verteilung der erhitzten Druckluft 16 über die ganze Breite des Kantenstreifens 4 sowie eine zusätzliche Beschleunigung der erhitzten Druckluft 16 beim Auftreffen auf den Kantenstreifen 4.

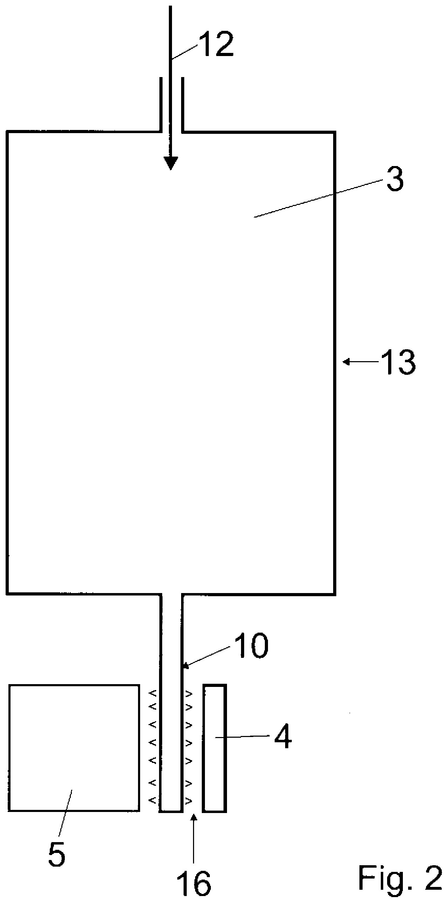

In der Figur 2 ist eine schematische Darstellung des Zusammenwirkens zwischen Erwärmungseinrichtung 3 und Kantenstreifen 4 bei der Beschichtung von Werkstückschmalflächen 6 zu erkennen. Aus einer nicht dargestellten Druckluftquelle in die Erwärmungseinrichtung 3 eingespeiste Druckluft 12 wird in der Erwärmungseinrichtung 3 über nicht weiter dargestellte Wärmetauscherelemente, z.B. parallele Rohrbündel oder Sintermaterial mit darin eingelagertem Heizelement, z.B. elektrischem oder gasbetriebenem Heizelement, mit der Wärme in Berührung gebracht und auf ca. 400 - 700 °C aufgeheizt. Nach Durchtreten der Erwärmungseinrichtung 3 tritt diese erhitzte Druckluft 16 durch den schlitzförmigen Auslaß 10 in Richtung auf den Kantenstreifen 4 und/oder die Schmalfläche des Werkstücks aus und erhitzt die wärmeaktivierbare Schicht des Kantenstreifens 4 und/oder die Schmalfläche des Werkstücks in der schon beschriebenen Weise. Durch die grundsätzlich bekannte Wirkungsweise der Kantenbeschichtungsvorrichtung 1 wird der Kantenstreifen 4 an die Schmalfläche 6 des Werkstückes 5 gedrückt und verklebt beim Abkühlen mit dieser Schmalfläche 6.

### Sachnummernliste

- 1: - Kantenanleimvorrichtung
- 2: - Träger
- 3: - Erwärmungseinrichtung
- 4: - Kantenstreifen
- 5: - Werkstück
- 6: - Schmalfläche
- 7: - Zufuhreinrichtung
- 8a: - Führungsrolle
- 8b: - Vorschubrolle
- 9: - Andruckrolle
- 10: - Auslaß
- 11: - Schneideinrichtung
- 12: - Luftzufuhr
- 13: - Wärmezufuhr
- 14: - Anschlag
- 15: - Werkstückauflage
- 16: - Heißluft/Heißgas

## Patentansprüche

1. Verfahren zum Aufbringen eines bandförmigen Kantenstreifens (4) auf Schmalflächen (6) eines Werkstücks (5), wobei der mehrschichtige kleberfreie, wärmeaktivierbare Kantenstreifen (4), auf den Schmalflächen (6) befestigt wird, mittels einer Zufuhreinrichtung (7) für den Kantenstreifen (4) und einer Andruckrolle (9), die den wärmeaktivierten Kantenstreifen (4) an die Schmalfläche (6) des Werkstücks (5) andrückt,
**dadurch gekennzeichnet, dass**
im Bereich von Zufuhreinrichtung (7) und/oder Andruckrolle (9) erhitzte Druckluft unter Druck auf den Kantenstreifen (4) und/oder die wärmeaktivierbare Schicht des Kantenstreifens (4) aufgegeben wird, wobei die erhitzte Druckluft von einer Erwärmungseinrichtung (3) mindestens auf die benötigte Aktivierungstemperatur für die wärmeaktivierbare Schicht des Kantenstreifens (4) gebracht wird und wobei die in die Erwärmungseinrichtung (3) eingeblasene Druckluft von einem externen Drucklufterzeuger stammt.

2. Verfahren gemäß Anspruch 1, **dadurch gekennzeichnet, dass** die Wirkung der erhitzten Druckluft beim Auftreffen auf den Kantenstreifen (4) und/oder die wärmeaktivierbare Schicht des Kantenstreifens (4) durch Beeinflussung des Volumenstroms und/oder der Temperatur und/oder des Drucks der erhitzten Druckluft und/oder die Vorschubgeschwindigkeit des Kantenstreifens (4) beim Beschichten der Schmalfläche (6) geregelt wird.

## Claims

1. Method for applying a band-shaped edge strip (4) onto narrow surfaces (6) of a workpiece (5), the multilayer adhesive-free, heat-activatable edge strip (4) being fixed to the narrow surfaces (6) by means of a feeding apparatus (7) for the edge strip (4) and a pressure roller (9), which presses the heat-activated edge strip (4) onto the narrow surface (6) of the workpiece (5),
**characterised in that**
in the region of the feeding apparatus (7) and/or pressure roller (9), heated compressed air is blown under pressure onto the edge strip (4) and/or the heat-activatable layer of the edge strip (4), the heated compressed air being brought at least to the required activation temperature for the heat-activatable layer of the edge strip (4) by means of a heating apparatus (3), and the compressed air blown into the heating apparatus (3) coming from an external air compressor.

2. Method according to claim 1, **characterised in that** the effect of the heated compressed air when impinging on the edge strip (4) and/or the heat-activatable layer of the edge strip (4) is controlled by influencing the volumetric flow rate and/or temperature and/or pressure of the heated compressed air and/or the advance speed of the edge strip (4) during coating of the narrow surface (6).

## Revendications

1. Procédé d'application d'une bande de bord (4) linéaire sur les surfaces étroites (6) d'une pièce usinée (5), dans lequel la bande de bord (4) multicouche activable par la chaleur, exempte de colle est fixée sur les surfaces étroites (6) au moyen d'un dispositif d'amenée (7) de la bande de bord (4) et d'un galet presseur (9), qui appuie la bande de bord (4) activée par la chaleur contre la surface étroite (6) de la pièce usinée (5),
**caractérisé en ce que**
de l'air comprimé chauffé est distribué dans la zone du dispositif d'amenée (7) et/ou du galet presseur (9) en exerçant une pression sur la bande de bord (4) et/ou la couche activable par la chaleur de la bande de bord (4), dans lequel l'air comprimé chauffé est amené au moins à la température d'activation nécessaire à la couche activable par la chaleur de la bande de bord (4) au moyen d'un dispositif de chauffage (3) et dans lequel l'air comprimé insufflé dans le dispositif de chauffage (3) provient d'un générateur d'air comprimé externe.

2. Procédé selon la revendication 1, **caractérisé en ce que** l'action de l'air comprimé chauffé atteignant la bande de bord (4) et/ou la couche activable par la chaleur de la bande de bord (4) est régulée par l'influence du débit volumique et/ou de la température et/ou de la pression de l'air comprimé chauffé et/ou par la vitesse de défilement de la bande de bord (4) lors du revêtement de la surface étroite (6).
